# EUROPÄISCHE PATENTSCHRIFT

(11) **EP 0 580 012 B1**
(45) Veröffentlichungstag und Bekanntmachung des Hinweises auf die Patenterteilung: **04.03.1998**
(21) Anmeldenummer: 93110780.9
(22) Anmeldetag: 06.07.1993
(51) Int. Cl.: H04L 29/06, H04Q 11/04

(54) **Verfahren zum Übertragen von Signalisierungssignalen und Nachrichtensignalen zwischen ISDN-Endgeräten unterschiedlicher ISDN-Netze unter Einbeziehung eines ATM-Netzes**
Method for transmitting signalling signals and information signals between ISDN-terminals of different ISDN-networks via an ATM-network
Méthode pour transmettre des signaux de signalisation et d'information entre des terminaux RNIS de différents réseaux RNIS via un réseau ATM

(30) Priorität: 23.07.1992 DE 4224388
(43) Veröffentlichungstag der Anmeldung: 26.01.1994
(73) Patentinhaber: SIEMENS AKTIENGESELLSCHAFT, 80333 München (DE)
(72) Erfinder: Rombach, Horst, D-80335 München 2 (DE)

(56) Entgegenhaltungen:
- EP-A- 0 493 176
- DE-C- 3 942 275
- PATENT ABSTRACTS OF JAPAN, unexamined applications, E Sektion, Band 16, Nr.
- 307, 07. Juli 1992 THE PATENT OFFICE JAPANESE GOVERNMENT Seite 44 E 1229

## Beschreibung

Die Erfindung betrifft ein Verfahren und eine Anordnung gemäß dem Oberbegriff des Patentanspruchs 1 bzw. des Patentanspruchs 2.

Die Komplexität von Kommunikationssystemen, insbesondere im Bürobereich, hat während ihres Entwicklungsprozesses stetig zugenommen. Dies liegt insbesondere daran, daß die Kommunikationsbedürfnisse sowie die Kommunikationswege sich aufgrund neuer Organisationsstrukturen grundlegend gewandelt haben, und demzufolge neue Leistungsmerkmale und -Dienste in die Kommunikationssysteme implementiert werden müssen. So haben beispielsweise Kommunikationssysteme, die zur Bürokommunikation eingesetzt werden, in den letzten Jahren für die angeschlossenen Teilnehmer Möglichkeiten eröffnet, auf unterschiedlichen Ebenen unter Benutzung einer Vielzahl von Leistungsmerkmalen und -Diensten miteinander zu kommunizieren.

So wurde die bis dahin existierende Kommunikationsform 'Sprache' um Leistungsmerkmale, wie 'Wahlwiederholung', 'Anrufumleitung', 'Kurzwahl' etc. erweitert. Darüber hinaus wurden neue Dienste, 'Telefax', 'Bildübertragung' etc. eingeführt.

Wurden ursprünglich zur Bereitstellung dieser neuen Leistungsmerkmale und -Dienste eigene Netze und Kommunikationssysteme verwendet, so hat sich in den letzten Jahren die Verwendung und Übertragung der diese Leistungsmerkmale und Dienste repräsentierenden Daten und Prozeduren in einem Netz durchgesetzt. Die mit dieser Integration verbundenen Ideen sind eng mit dem Begriff ISDN (Integrated Services Digital Network) verbunden. Damit können jetzt Daten in einem Netz und auf einer Leitung und mit einer Rufnummer übertragen werden. Neue Dienste, wie beispielsweise die Bildübertragung, erfordern aber auch neue Übertragungsverfahren. So werden Daten zur Bildübertragung als Paketdaten zum Endteilnehmer übertragen. Die Übertragung und Durchschaltung von Paketdaten geschieht allerdings auf grundlegend andere Weise, als dies bei der herkömmlichen 64 kbit/s-Übertragung durchgeführt wurde. Diese der Übermittlung von Paketdaten dienenden Netze wurden in bestehenden 64 kbit/s Netze eingebettet. Der Übergang zwischen beiden Netzen erfolgt über sogenannte 'Interworking Units'.

Aus der europäischen Patentanmeldung EP-A-90293 sind ein Verfahren und eine Schaltungsanordnung zum Übertragen von Signalisierungssignalen und Nachrichtensignalen zwischen mit unterschiedlichen Übertragungsprozeduren arbeitenden Vermittlungsstellen eines ersten und zweiten Vermittlungsnetzes bekannt. Darin wird beschrieben, wie die Paketiervorgänge der Signalisierungssignale und Nachrichtensignale in den Netzübergangseinheiten (IWU) erfolgen. Dabei kann das erste Vermittlungsnetz ein Paketnetz und das zweite Vermittlungsnetz ein ISDN-Netz sein. In Abhängigkeit von den paketierten Signalisierungssignalen können dann die Durchschaltevorgänge im Paketnetz durchgeführt werden. Problematisch an diesem Verfahren ist jedoch, daß die Auswertung der paketierten Signalisierungssignale im ATM-Netz durch zu diesem Zweck bereitzustellende Auswerteprozeduren erfolgt, was letztendlich eine Erhöhung des Grades der Komplexität des Paketnetzes sowie unvermeidbare Verzögerungszeiten bedeutet.

Weiterhin ist aus der europäischen Patentanmeldung EP-A-493176 ein Verfahren und eine Schaltungsanordnung zum Übertragen von Signalisierungssignalen und Nachrichtensignalen zwischen synchronen Netzen unter Einbeziehung eines asynchronen Netzes (ATM) bekannt. Wie die Signalisierungssignale und Nachrichtensignale der synchronen Netze effizient über die asynchronen Netze übertragen und durchgeschaltet werden, wird hier nicht angesprochen.

Der Erfindung liegt die Aufgabe zugrunde, ein Verfahren und eine Schaltungsanordnung anzugeben, mittels derer eine besonders einfache Übertragung und Durchschaltung von Signalisierungssignalen und Nachrichtensignalen zwischen ISDN-Netzen über ein ATM-Netz durchgeführt werden kann.

Diese Aufgabe wird durch die kennzeichnenden Merkmale des Anspruchs 1 bzw. des Anspruchs 2 gelöst.

Wesentliche Merkmale der Erfindung sind darin zu sehen, daß die Signalisierungssignale und Nachrichtensignale eines Netzes in den Informationsteilen von Zellen paketiert werden. Die Übertragung und Durchschaltung der paketierten Zellen im ATM-Netz erfolgt dann über ATM-Kommunikationssysteme, in denen Festverbindungen eingestellt und nicht die Durchschaltewege im Zuge des Verbindungsaufbaus durch Signalisierungszellen festgelegt werden.
Derartige Kommunikationssysteme können beispielsweise Cross Connectsysteme sein. Der Vorteil der vorliegenden Erfindung ist darin zu sehen, daß Durchschaltvorgänge in dem ATM-Netz in diesem Fall sehr viel schneller ohne Auswertungsprozeduren von Signalisierungszellen durchgeführt werden können. Weiterhin stehen damit dem an das ATM-Netz angeschlossenen anderen ISDN-Netz mit seinen Teilnehmerendeinrichtungen der gesamte Leistungsumfang des einen ISDN-Netzes zur Verfügung, da die von diesem ausgehenden Signalisierungssignale und Nachrichtensignale über das ATM-Netz paketiert übertragen und nach dem Übertragungsvorgang depaketiert den Teilnehmerendeinrichtungen zur Verfügung gestellt werden. Aus Sicht dieser Teilnehmerendeinrichtungen des anderen ISDN-Netzes kann somit eine über das ATM-Netz erfolgte Übertragung nicht festgestellt werden.

Im folgenden wird die Erfindung anhand eines Ausführungsbeispiels näher erläutert.

In einer Zeichnung sind mit unterschiedlichen Übertragungsprozeduren arbeitende Vermittlungsnetze dargestellt. Dabei handelt es sich um die ISDN-Netze SB1, SB2 das ATM-Netz BB. Die Schnittstellen der Netze werden durch sogenannte Netzübergangseinheiten gebildet. Diese gliedern sich in erste Netzübergangseinheiten IWU1, die die auf den Teilnehmeranschlußleitungen im ISDN-Netz SB1 verwendeten 2 B + D-Kanäle in Zellen paketieren, und in zweite Netzübergangseinheiten IWU2, die diese paketierten Zellen depaketieren und als 2 B + D-Kanäle zur weiteren Übertragung bereitstellen.

Die Durchschaltung und Weiterleitung von Informationen im ISDN-Netz SB1 erfolgt durch ein Schmalbandkommunikationssystem KS, das beispielsweise als Nebenstellenanlage realisiert ist. Daran sind als Teilnehmerendeinrichtung Schmalbandkommunikationsendgeräte SBTLN angeschlossen. Der Anschluß erfolgt über Teilnehmeranschlußbaugrupppen SLM. An weitere Teilnehmeranschlußbaugruppen SLM sind Leitungen zu den ersten Netzübergangseinheiten IWUl angeschlossen. Diese sind weiterhin mit wenigstens einem Cross Connectsystem CC verbunden. Im Cross Connectsystem CC werden vor dem Durchschaltevorgang die durchzuschaltenden Verbindungen fest eingestellt. Dies erfolgt beispielsweise durch ein an das Cross Connectsystem CC angeschlossenes Betriebsterminal PC, das für Bedienpersonal zugänglich ist. Ausgangsseitig ist das Cross Connectsystem CC seinerseits mit den zweiten Netzübergangseinheiten IWU2 verbunden, wobei diese ihrerseits wieder die Schnittstelle zu dem anderen ISDN-Netz SB2 darstellen. Dieses kann seinerseits aus direkt mit den zweiten Netzübergangseinheiten IWU2 verbundenen Schmalbandkommunikationsendgeräten SBTLN oder aus wenigstens einem der zuvor erwähnten Kommunikationssysteme entsprechenden Kommunikationssystem bestehen.

Im folgenden wird davon ausgegangen, daß ein Wunsch für eine Verbindung von einem A-Teilnehmer des einen ISDN-Netzes SB1 zu einem B-Teilnehmer des anderen ISDN-Netzes SB2 über ein dazwischengeschaltetes ATM-Netz BB besteht. Durch die vom A-Teilnehmer ausgehenden Signalisierungssignale ist der Ausgang am Schmalbandkommunikationssystem KS festgelegt. Über diesen Ausgang verlassen die Signalisierungssignale und Nachrichtensignale das Schmalbandkommunikationssystem KS über die jeweilige Teilnehmeranschlußleitung. In der zugehörigen ersten Netzübergangseinheit IWU1 werden die Signalisierungssignale und Nachrichtensignale zusammen im Informationsteil der Zelle paketiert und über das fest eingestellte Cross Connectsystem CC zu den zweiten Netzübergangseinheiten IWU2 übertragen, das Herstellen der Verbindung erfolgt also nicht durch ein Aussenden von Signalisierungszellen. Dort werden die vorher paketierten Zellen depaketiert und zum B-Teilnehmer weitergeleitet. Die eingangs paketierten Signalisierungssignale und Nachrichtensignale werden somit im ATM-Netz "quasi" durchgereicht. Die Kommunikation zwischen A-Teilnehmer und B-Teilnehmer erfolgt somit wie bei einer direkten Verbindung beider ISDN-Netze SB1, SB2.

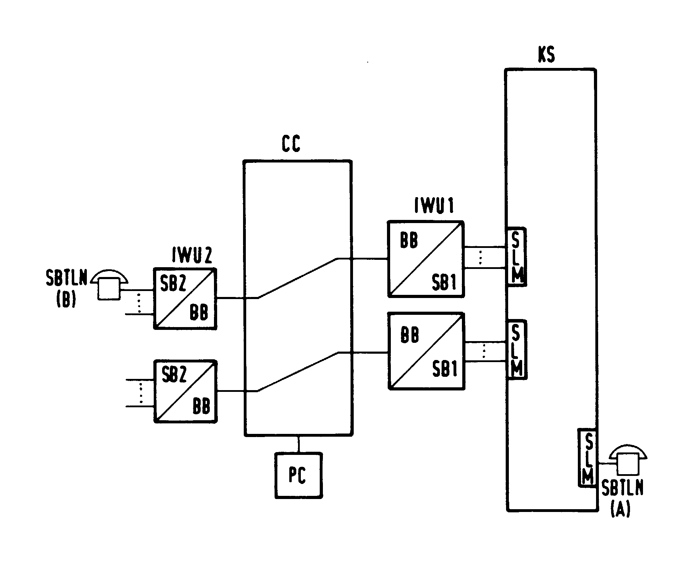

## Patentansprüche

1. Verfahren zum Übertragen von Signalisierungssignalen und Nachrichtensignalen zwischen ISDN-Endgeräten unterschiedlicher ISDN-Netze unter Einbeziehung eines ATM-Netzes, mit
- den ISDN-Netzen zugehörigen ISDN-Schmalbandkommunikationssystemen (KS) mit daran angeschlossenen Schmalbandkommunikationsendgeräten (SBTLN),
- einem ATM-Netz (BB),in dem Signalisierungssignale und Nachrichtensignale in Form von Zellen, die jeweils aus einem Zellenkopf und einem Informationsteil bestehen, übertragen werden, sowie
- Netzübertragungseinheiten (IWU), in denen die Paketierung der von einem ISDN-Netz (SB) ausgehenden Signalisierungssignale und Nachrichtensignale erfolgt,
**dadurch gekennzeichnet**,
daß die Signalisierungssignale und Nachrichtensignale eines rufenden Schmalbandkommunikationsendgerätes (SBTLN) eines ISDN-Schmalbandkommunikationssystems (KS) des einen ISDN-Netzes (SB1) in einer ersten Netzübergangseinheit (IWU1) in Zellen derart paketiert werden, daß die Signalisierungssignale und Nachrichtensignale eines Teilnehmers zusammen in die Informationsteile von Zellen eingefügt werden, und daß die Zellen über das ATM-Netz (BB) über fest durchgeschaltete Verbindungen über eine zweite Netzübergangseinheit (IWU2) zu wenigstens einem Schmalbandkommunikationsendgerät (SBTLN) des anderen ISDN-Netzes (SB2) übertragen werden, wobei die zweite Netzübergangseinheit (IWU2) die paketierten Zellen wieder depaketiert und die darin enthaltenen Signalisierungssignale und Nachrichtensignale in Richtung Ziel teilnehmer weiterleitet.

2. Anordnung zur Durchführung des Verfahrens nach Anspruch 1, mit Mitteln zum Übertragen von Signalisierungssignalen und Nachrichtensignalen zwischen ISDN-Endgeräten unterschiedlicher ISDN-Netze unter Einbeziehung eines ATM-Netzes, mit
- den ISDN-Netzen zugehörigen ISDN-Schmalbandkommunikationssystemen (KS) mit daran angeschlossenen Schmalbandkommunikationsendgeräten (SBTLN),
- einem ATM-Netz (BB),in dem Signalisierungssignale und Nachrichtensignale in Form von Zellen, die jeweils aus einem Zellenkopf und einem Informationsteil bestehen, übertragen werden, sowie
- Netzübertragungseinheiten (IWU), in denen die Paketierung der von einem ISDN-Netz (SB) ausgehenden Signalisierungssignale und Nachrichtensignale erfolgt,
**dadurch gekennzeichnet**,
daß eine erste Netzübergangseinheit (IWU1) vorgesehen ist, in der die Signalisierungssignale und Nachrichtensignale eines rufenden Schmalbandkommunikationsendgerätes (SBTLN) eines ISDN-Schmalbandkommunikationssystems (KS) des einen ISDN-Netzes (SB1) zusammen in die Informationsteile von Zellen eingefügt werden, und
daß eine zweite Netzübergangseinheit (IWU2) vorgesehen ist, über die die über das ATM-Netz (BB) über fest durchgeschaltete Verbindungen übertragenen Zellen empfangen, depaketiert und zu wenigstens einem Schmalbandkommunikationsendgerät (SBTLN) des anderen ISDN-Netzes (SB2) übertragen werden.

3. Anordnung nach Anspruch 2,
**dadurch gekennzeichnet**,
daß ein der Durchschaltung von Zellen im ATM-Netz dienendes ATM-Kommunikationssystem als Cross-Connect-System (CC) ausgebildet ist.

4. Anordnung nach Anspruch 2,
**dadurch gekennzeichnet**,
daß an die zweiten Netzübergangseinheiten (IWU2) Schmalbandkommunikationsendgeräte (SBTLN) direkt anschließbar sind.

## Claims

1. Method for transmitting signalling signals and information signals between ISDN terminals in different ISDN networks including an ATM network, having
- ISDN narrowband communications systems (KS) which are associated with the ISDN networks and have narrowband communications terminals (SBTLN) connected to them,
- one ATM network (BB) in which signalling signals and information signals are transmitted in the form of cells, which each comprise a cell header and an information part, as well as
- network transmission units (IWU) in which the packetizing of the signalling signals and information signals originating from an ISDN network (SB) is carried out,
characterized in that the signalling signals and information signals from a calling narrowband communications terminal (SBTLN) in an ISDN narrowband communications system (KS) in one ISDN network (SB1) are packetized in a first network interworking unit (IWU1) into cells in such a manner that the signalling signals and information signals from a subscriber are inserted together into the information parts of cells, and in that the cells are transmitted via the ATM network (BB) via hard-wired connections via a second network interworking unit (IWU2) to at least one narrowband communications terminal (SBTLN) in the other ISDN network (SB2), the second network interworking unit (IWU2) depacketizing the packetized cells again and passing on the signalling signals and information signals contained in them in the direction of the destination subscriber.

2. Arrangement for carrying out the method according to Claim 1, having means for transmitting signalling signals and information signals between ISDN terminals in different ISDN networks including an ATM network, having
- ISDN narrowband communications systems (KS) which are associated with the ISDN networks and have narrowband communications terminals (SBTLN) connected to them,
- one ATM network (BB) in which signalling signals and information signals are transmitted in the form of cells, which each comprise a cell header and an information part, as well as
- network transmission units (IWU) in which the packetizing of the signalling signals and information signals originating from an ISDN network (SB) is carried out,
characterized in that a first network interworking unit (IWU1) is provided in which the signalling signals and information signals from a calling narrowband communications terminal (SBTLN) in an ISDN narrowband communications system (KS) in one ISDN network (SB1) are inserted together into the information parts of cells, and in that a second network interworking unit (IWU2) is provided, via which the cells which are transmitted via the ATM network (BB) via hard-wired connections are received, depacketized and transmitted to at least one narrowband communications terminal (SBTLN) in the other ISDN network (SB2).

3. Arrangement according to Claim 2, characterized in that an ATM communications system which is used to switch through cells in the ATM network is designed as a cross-connect-system (CC).

4. Arrangement according to Claim 2, characterized in that narrowband communications terminals (SBTLN) can be connected directly to the second network interworking units (IWU2).

## Revendications

1. Procédé de transmission de signaux de signalisation et de signaux d'information entre des terminaux RNIS de différents réseaux RNIS via un réseau ATM, comprenant
- des systèmes de communication à bande étroite RNIS (KS) qui sont associés aux réseaux RNIS et auxquels sont raccordés des terminaux de communication à bande étroite (SBTLN),
- un réseau ATM (BB) dans lequel on transmet des signaux de signalisation et des signaux d'information sous forme de cellules qui sont constituées chacune d'un en-tête et d'une partie d'information, et
- des unités passerelles (IWU) dans lesquelles on effectue l'assemblage en paquets des signaux de signalisation et des signaux d'information provenant d'un réseau RNIS (SB),
caractérisé par le fait que
dans une première unité passerelle (IWU1), on assemble en paquets dans des cellules les signaux de signalisation et les signaux d'information d'un terminal de communication à bande étroite appelant (SBTLN) d'un système de communication à bande étroite RNIS (KS) d'un premier réseau RNIS (SB1) de telle sorte que l'on insère les signaux de signalisation et les signaux d'information d'un abonné conjointement dans les parties d'information de cellules, et on transmet les cellules via le réseau ATM (BB) par l'intermédiaire de liaisons fixes non commutées passant par une seconde unité passerelle (IWU2) à au moins un terminal de communication à bande étroite (SBTLN) de l'autre réseau RNIS (SB2), sachant que la seconde unité passerelle (IWU2) désassemble de nouveau les cellules assemblées en paquets et retransmet les signaux de signalisation et les signaux d'information qui y sont contenus en direction de l'abonné destinataire.

2. Dispositif pour la mise en oeuvre du procédé selon la revendication 1, comportant des moyens pour la transmission de signaux de signalisation et de signaux d'information entre des terminaux RNIS de différents réseaux RNIS via un réseau ATM, comprenant
- des systèmes de communication à bande étroite RNIS (KS) qui sont associés aux réseaux RNIS et auxquels sont raccordés des terminaux de communication à bande étroite (SBTLN),
- un réseau ATM (BB) dans lequel des signaux de signalisation et des signaux d'information sont transmis sous forme de cellules qui sont constituées chacune d'un en-tête et d'une partie d'information, et
- des unités passerelles (IWU) dans lesquelles s'effectue l'assemblage en paquets des signaux de signalisation et des signaux d'information provenant d'un réseau RNIS (SB),
caractérisé par le fait que
il est prévu une première unité passerelle (IWU1) dans laquelle les signaux de signalisation et les signaux d'information d'un terminal de communication à bande étroite appelant (SBTLN) d'un système de communication à bande étroite RNIS (KS) d'un premier réseau RNIS (SB1) sont insérés conjointement dans les parties d'information de cellules, et
il est prévu une seconde unité passerelle (IWU2) par l'intermédiaire de laquelle les cellules transmises via le réseau ATM (BB) par l'intermédiaire de liaisons fixes non commutées sont reçues, désassemblées et transmises à au moins un terminal de communication à bande étroite (SBTLN) de l'autre réseau RNIS (SB2).

3. Dispositif selon la revendication 2,
caractérisé par le fait que
un système de communication ATM servant à la commutation de cellules dans le réseau ATM est conçu sous forme de système Cross Connect (CC).

4. Dispositif selon la revendication 2,
caractérisé par le fait que
des terminaux de communication à bande étroite (SBTLN) peuvent être raccordés directement aux secondes unités passerelles (IWU2).
